# FASCICULE DE BREVET EUROPEEN

(11) **EP 2 340 203 B1**
(45) Date de publication et mention de la délivrance du brevet: **05.12.2012**
(21) Numéro de dépôt: 09755936.3
(22) Date de dépôt: 28.10.2009
(51) Int. Cl.: B64D 29/04, B64C 7/02, B64C 1/00

(54) **AVION A MOTEURS PARTIELLEMENT ENCASTRES DANS LE FUSELAGE**
FLUGZEUG MIT TEILWEISE IM RUMPF EINGESCHLOSSENEN TRIEBWERKEN
AIRPLANE HAVING ENGINES PARTIALLY ENCASED IN THE FUSELAGE

(30) Priorité: 30.10.2008 FR 0806052
(43) Date de publication de la demande: 06.07.2011
(73) Titulaire: Snecma, 75015 Paris (FR)
(72) Inventeur: CHANEZ, Philippe, Gérard, F-75015 Paris (FR); LECORDIX, Jean-Loïc, Hervé, F-77115 Blandy les Tours (FR); THOMAS, Stéphane, Jacques, François, F-77170 Coubert (FR)
(74) Mandataire: Ramey, Daniel
(86) Numéro de dépôt international: PCT/FR2009/001256
(87) Numéro de publication internationale: WO 2010/049610

(56) Documents cités:
- GB-A- 1 463 810

## Description

La présente invention se rapporte à un avion civil équipé de moteurs à turboréacteurs à double flux dont les nacelles sont partiellement encastrées dans le fuselage de l'avion. Un tel avion est connu de GB-1463810, qui est regardé comme l'art antérieur le plus proche.

Les avions civils actuels sont propulsés à l'aide de turboréacteurs montés sous les ailes ou en position arrière sur le fuselage et y sont fixés par l'intermédiaire de pylônes.

Dans le cadre d'une réduction de la consommation de carburant, les motoristes s'orientent vers un encastrement partiel des moteurs à l'intérieur du fuselage, ce qui permettrait de supprimer les pylônes et leurs carénages et réduirait la masse de l'ensemble propulsif. De plus, l'intégration partielle des moteurs dans le fuselage autorise une augmentation du diamètre des moteurs, ce qui rend envisageable l'utilisation de moteurs à très grand taux de dilution. Enfin, la réduction de la surface de la nacelle en contact avec l'air circulant autour de l'avion permettrait de réduire la traînée.

En vol, une couche limite à vitesse sensiblement nulle est formée autour sur le fuselage de l'avion et génère une traînée aérodynamique. Il a été longtemps considéré que les moteurs ne devaient pas ingérer cette couche limite susceptible de provoquer une distorsion importante au niveau de la soufflante et des vibrations des arbres, et on a équipé les avions de « pièges » à couche limite, situés en amont de l'entrée d'air des moteurs partiellement encastrés. Toutefois, des études plus récentes ont montré que l'absorption d'une partie de cette couche limite par les moteurs permettait de réduire de manière importante la traînée aérodynamique de l'avion et d'abaisser la vitesse de l'air entrant dans les moteurs et donc d'augmenter le rendement de ces derniers.

L'invention a notamment pour but de réduire la consommation de carburant d'un avion en limitant la traînée aérodynamique par absorption de couche limite.

Elle propose à cet effet, un avion équipé de moteurs à turboréacteur à double flux dont les nacelles sont au moins partiellement encastrées dans le fuselage de l'avion, caractérisé en ce que l'entrée d'air de chaque moteur est reliée au fuselage par deux parois de guidage de couche limite, ces parois s'étendant vers l'amont de l'entrée d'air et s'écartant l'une de l'autre vers l'amont.

Pour chaque moteur, on intègre donc au fuselage en amont de l'entrée d'air du moteur deux parois qui convergent l'une vers l'autre en direction de l'entrée d'air et qui forment une demi-goulotte ou un demi-entonnoir de collecte et de guidage de couche limite. En fonctionnement, la couche limite est guidée vers l'entrée d'air du moteur sur une étendue plus large que l'entrée d'air du moteur, ce qui permet de réduire davantage la traînée aérodynamique de l'avion. Cette plus grande absorption de couche limite permet également d'augmenter le rendement du moteur par abaissement de la vitesse de l'air en entrée.

Avantageusement, les parois de guidage ont une hauteur sur le fuselage qui augmente depuis l'amont jusqu'à l'entrée d'air de chaque moteur, ce qui permet au voisinage du moteur de récupérer et d'absorber dans le moteur un maximum de couche limite et réduire les turbulences parasites autour du moteur.

Les parois de guidage peuvent faire un angle d'environ 25° à 50° l'une avec l'autre.

Les parois de guidage de chaque moteur peuvent également être incurvées avec une concavité tournée vers l'espace situé entre deux parois de guidage, ce qui permet d'améliorer le guidage d'air de la couche limite par rapport à des parois de guidage planes.

Selon une autre caractéristique de l'invention, les parois de guidage s'étendent entre le fuselage et des points de la périphérie de l'entrée d'air qui sont écartés du fuselage et dont les rayons qui relient ces points à l'axe du moteur forment entre eux un angle compris entre 120° et 180°.

Selon encore une autre caractéristique de l'invention, la partie du fuselage située entre les deux parois de guidage est à profil en S avec une concavité au niveau de l'entrée d'air du moteur, ce qui permet d'accélérer l'air entre les deux parois de guidage, et d'augmenter l'effet d'aspiration de l'air et d'améliorer l'absorption de couche limite.

L'utilisation combinée des parois de guidage et des profils en S permet de doubler l'absorption de couche limite par chaque moteur.

Selon une autre caractéristique de l'invention, seule la partie amont de la nacelle est encastrée dans le fuselage, ce qui permet que l'éjection des gaz chauds se fasse à l'extérieur du fuselage et à distance de celui-ci.

Avantageusement, la partie amont de chaque nacelle encastrée dans le fuselage correspond au moins à un tiers et au maximum à 50% de la périphérie de la nacelle.

Avantageusement, l'extrémité aval de chaque moteur est écartée du fuselage et est reliée au fuselage par une paroi plane s'étendant en aval du moteur sur toute la surface de l'espace entre le moteur et le fuselage. Cette paroi permet ainsi une protection thermique du fuselage en évitant d'une part que le flux de gaz chauds éjecté par le moteur vienne en contact avec le fuselage et évitant d'autre part la formation de tourbillons entre la partie aval du moteur et le fuselage.

L'invention sera mieux comprise et d'autres détails, avantages et caractéristiques de l'invention apparaîtront à la lecture de la description suivante faite à titre d'exemple non limitatif, en référence aux dessins annexés dans lesquels :
- la figure 1 est une vue schématique en perspective d'un avion selon l'invention ;
- la figure 2 est une vue à plus grande échelle de la partie délimitée en pointillé sur la figure 1 ;
- la figure 3 est une vue schématique partielle de côté d'un avion selon l'invention ;
- la figure 4 est une vue schématique du dessus d'un moteur d'avion selon l'invention.

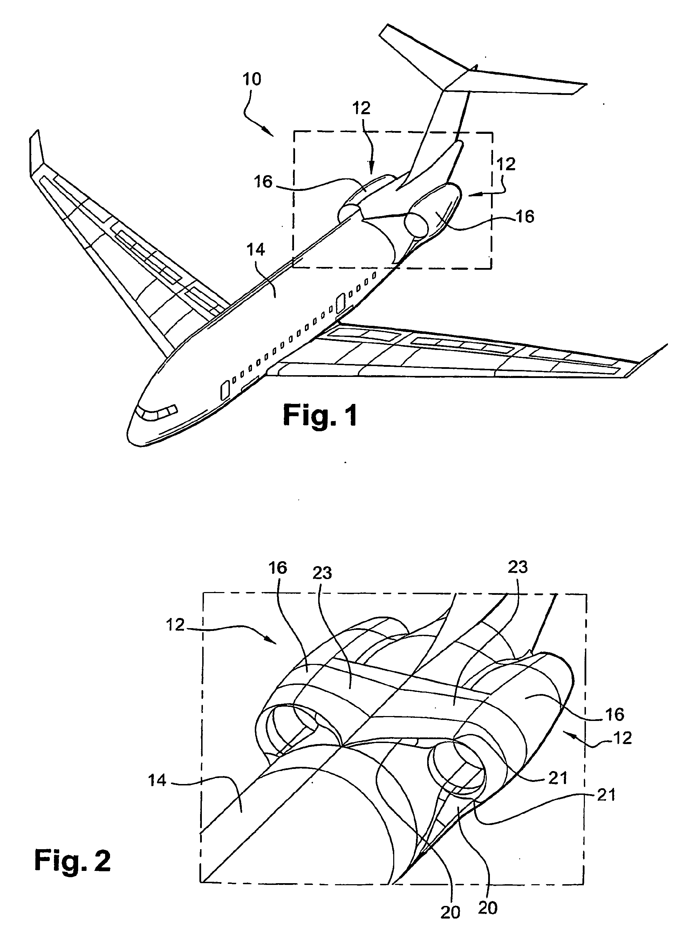

On se réfère tout d'abord à la figure 1 qui représente un avion civil 10 équipé de deux moteurs à turboréacteur 12 montés sur la partie arrière du fuselage 14 de l'avion de chaque côté de celui-ci.

Les moteurs 12 de l'avion 10 comprennent des nacelles 16 qui sont partiellement encastrées dans le fuselage 14 dans leur partie amont. Ce type de montage des moteurs 12 à configuration parfois appelée « à moteurs enterrés » permet d'éliminer les pylônes et leurs carénages qui relient traditionnellement les moteurs à l'avion et de réduire la surface des nacelles en contact avec l'air circulant autour de l'avion 10, ce qui réduit la traînée aérodynamique.

En vol, une couche limite est formée autour du fuselage 14 de l'avion 10 et crée la traînée aérodynamique de l'avion. Cette couche limite peut avoir une épaisseur de l'ordre de 30 à 40 cm pour un avion d'environ 30 m de longueur en vitesse de croisière.

L'invention propose un dispositif permettant d'éliminer un maximum de couche limite formée sur le fuselage 14 en l'ingérant à l'intérieur des moteurs 12 de l'avion 10.

L'entrée d'air 18 de chaque moteur 12 comporte à cet effet deux parois 20 reliées au fuselage 14 de l'avion 10 et s'écartant l'une de l'autre vers l'amont.

La hauteur de chaque paroi 20 diminue vers l'amont depuis l'entrée d'air 18, jusqu'à devenir nulle à son extrémité amont. Cette évolution de la hauteur liée à la convergence de ces parois vers l'entrée d'air du moteur, permet d'orienter une étendue maximale de couche limite vers l'intérieur du moteur 12.

Comme on peut le voir sur la figure 2, les deux parois 20 sont raccordées à deux points 21 de la périphérie de l'entrée d'air du moteur 12, ces deux points 21 étant sensiblement diamétralement opposés ou écartés angulairement l'un de l'autre d'un angle compris entre environ 120° et 180°.

L'angle formé par les deux parois 20 est compris entre 25° et 50° environ.

Les parois de guidage de chaque moteur s'étendant sur la partie supérieure du fuselage sont reliées à leurs extrémités amont.

Les parois de guidage de chaque moteur peuvent être incurvées avec une concavité tournée vers l'espace situé entre deux parois de guidage, ce qui permet d'améliorer le guidage d'air de la couche limite par rapport à des parois de guidage planes.

Des panneaux de carénage 23 s'étendent en aval de chacune de ces parois et relient latéralement les deux moteurs, afin de permettre un bon écoulement d'air en aval de ces parois.

Des panneaux de carénage s'étendent également en aval des parois de guidage s'étendant sur la partie inférieure du fuselage (non représentés).

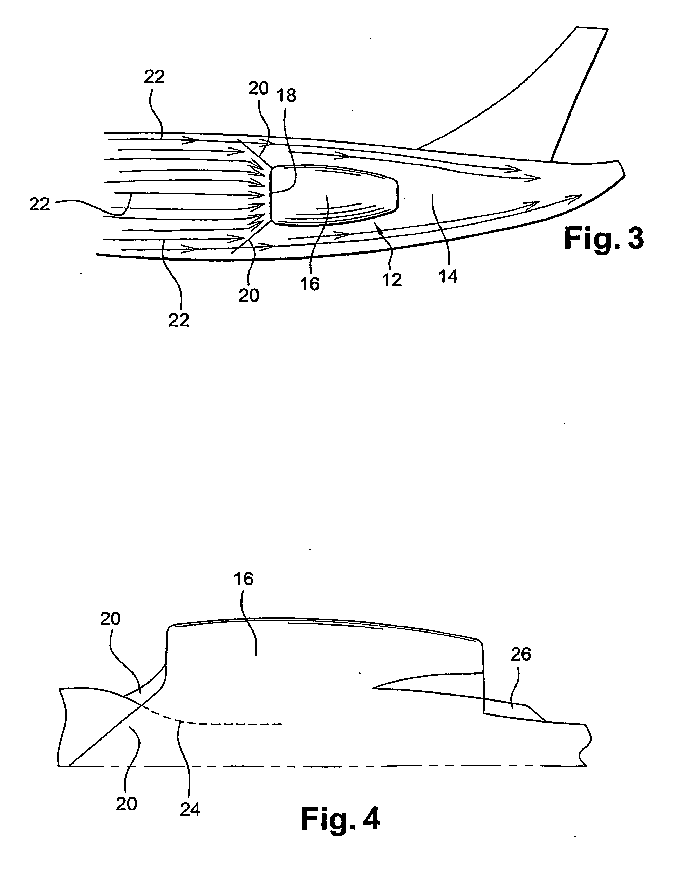

La figure 3 représente des lignes de courant 22 de la couche limite formée sur le fuselage 14 de l'avion 10. On constate que des lignes de courant 22 qui ne sont pas dans l'alignement axial de l'entrée d'air 18 du moteur 12 sont ramenées par les parois de guidage 20 vers l'entrée d'air du moteur 12.

Selon une autre caractéristique de l'invention, la surface du fuselage située entre les deux parois de guidage 20 est à profil en S (ligne 24 en pointillés sur la figure 4) et comporte une concavité au niveau de l'entrée d'air du moteur, ce qui permet d'accélérer l'air de la couche limite et d'augmenter la captation de couche limite par le moteur.

La partie amont de la nacelle 16 est partiellement encastrée dans le fuselage 14 et sa partie aval s'écarte du fuselage 14, ce qui autorise une éjection des gaz chauds à distance du fuselage 14. La partie encastrée de la nacelle représente environ un tiers et au plus la moitié de la partie amont de la nacelle.

Comme représenté en figure 4, l'extrémité aval du moteur 12 est reliée au fuselage par l'intermédiaire d'une paroi 26 qui est positionnée sensiblement radialement par rapport au moteur 12 et au fuselage 14 de l'avion 10. Cette paroi permet de protéger le fuselage 14 des gaz chauds éjectés par le moteur 12 en empêchant des recirculations de gaz chauds entre le moteur 12 et le fuselage 14 et la création d'un traînée additionnelle.

L'utilisation combinée des parois de guidage 20 et de la surface du fuselage 14 à profil en S permet d'orienter environ 50% de l'air de la couche limite du fuselage 14 vers l'intérieur des moteurs 12 dans le cas d'un moteur 12 dont la partie avant de la nacelle est encastré à environ un tiers dans le fuselage 14.

Le gain de masse et de traînée qui résulte de l'encastrement partiel des nacelles 16 dans le fuselage et de l'absorption d'une partie de la couche limite permet d'abaisser d'environ 3 à 5 % la consommation de carburant.

## Revendications

1. Avion (10) équipé de moteurs (12) à turboréacteur à double flux dont les nacelles (16) sont au moins partiellement encastrées dans le fuselage (14) de l'avion, **caractérisé en ce que** l'entrée d'air de chaque moteur (12) est reliée au fuselage par deux parois de guidage (20) de couche limite, ces parois (20) s'étendant vers l'amont de l'entrée d'air (18) et s'écartant l'une de l'autre vers l'amont.

2. Avion selon la revendication 1, **caractérisé en ce que** la hauteur par rapport au fuselage des parois de guidage (20) diminue vers l'amont depuis l'entrée d'air (18) du moteur (12).

3. Avion selon la revendication 1 ou 2, **caractérisé en ce que** les parois de guidage font un angle d'environ 25° à 50° l'une avec l'autre.

4. Avion selon la revendication 1 ou 2, **caractérisé en ce que** les parois de guidage de chaque moteur sont incurvées avec une concavité tournée vers l'espace situé entre deux parois de guidage.

5. Avion selon l'une des revendications 1 à 4, **caractérisé en ce que** les parois de guidage s'étendent entre le fuselage et des points de la périphérie de l'entrée d'air qui sont écartés du fuselage et dont les rayons qui relient ces points à l'axe du moteur forment entre eux un angle compris entre 120° et 180°.

6. Avion selon l'une des revendications 1 à 5, **caractérisé en ce que** la partie du fuselage (14) située entre deux parois de guidage (20) est à profil en S.

7. Avion selon l'une des revendications précédentes, **caractérisé en ce que** seule la partie amont de la nacelle (16) est encastrée dans le fuselage (14).

8. Avion selon la revendication 7, **caractérisé en ce que** la partie amont de la nacelle (16) est au moins encastrée pour un tiers à l'intérieur du fuselage (14) et au maximum à 50%.

9. Avion selon l'une des revendications précédentes, **caractérisé en ce que** la partie aval de chaque moteur (12) est écartée du fuselage et est reliée au fuselage (14) par une paroi plane (26) s'étendant en aval du moteur (12) sur toute la surface de l'espace entre le moteur et le fuselage.

## Claims

1. An airplane (10) fitted with bypass turbojet engines (12) having nacelles (16) that are embedded at least in part in the fuselage (14) of the airplane, the airplane being **characterized in that** the air intake of each engine (12) is connected to the fuselage by two boundary layer guide walls (20), these walls (20) extending upstream from the air intake (18) and flaring apart from each other in the upstream direction.

2. An airplane according to claim 1, **characterized in that** the height of the guide walls (20) relative to the fuselage decreases going upstream from the air intake (18) of the engine (12).

3. An airplane according to claim 1 or claim 2, **characterized in that** the guide walls form an angle of about 25° to about 50° relative to each other.

4. An airplane according to claim 1 or claim 2, **characterized in that** the guide walls of each engine are curved with a concave side facing towards the space situated between the two guide walls.

5. An airplane according to any one of claims 1 to 4, **characterized in that** the guide walls extend between the fuselage and peripheral points of the air intake that are spaced apart from the fuselage, and for which the radii that connect said points to the axis of the engine form between them an angle lying in the range 120° to 180°.

6. An airplane according to any one of claims 1 to 5, **characterized in that** the portion of the fuselage (14) situated between the two guide walls (20) has an S-shaped profile.

7. An airplane according to any preceding claim, **characterized in that** only the upstream portion of the nacelle (16) is embedded in the fuselage (14).

8. An airplane according to claim 7, **characterized in that** at least one-third and at most 50% of the upstream portion of the nacelle (16) is embedded inside the fuselage (14).

9. An airplane according to any preceding claim, **characterized in that** the downstream portion of each engine (12) is spaced apart from the fuselage and is connected to the fuselage (14) by a plane wall (26) extending downstream from the engine (12) over the entire area of the space between the engine and the fuselage.

## Patentansprüche

1. Flugzeug (10), das mit Triebwerken (12) mit Turbofan ausgestattet ist, deren Triebwerksgondeln (16) zumindest teilweise in den Flugzeugrumpf (14) des Flugzeugs eingelassen sind, **dadurch gekennzeichnet, dass** der Lufteinlass eines jeden Triebwerks (12) über zwei Grenzschicht-Führungswände (20) mit dem Flugzeugrumpf verbunden ist, wobei diese Wände (20) sich nach stromaufwärts des Lufteinlasses (18) erstrecken und sich in Richtung stromaufwärts voneinander entfernen.

2. Flugzeug nach Anspruch 1, **dadurch gekennzeichnet, dass** die Höhe der Führungswände (20) bezüglich des Flugzeugrumpfs vom Lufteinlass (18) des Triebwerks (12) ausgehend in Richtung stromaufwärts abnimmt.

3. Flugzeug nach Anspruch 1 oder 2, **dadurch gekennzeichnet, dass** die Führungswände einen Winkel von etwa 25° bis 50° miteinander einschließen.

4. Flugzeug nach Anspruch 1 oder 2, **dadurch gekennzeichnet, dass** die Führungswände eines jeden Triebwerks mit einer Konkavität gekrümmt verlaufen, die dem Raum zwischen zwei Führungswänden zugewandt ist.

5. Flugzeug nach einem der Ansprüche 1 bis 4, **dadurch gekennzeichnet, dass** die Führungswände sich zwischen dem Flugzeugrumpf und den Umfangspunkten des Lufteinlasses erstrecken, die von dem Flugzeugrumpf entfernt liegen und deren Radien, welche diese Punkte mit der Achse des Triebwerks verbinden, einen Winkel von zwischen 120° und 180° miteinander einschließen.

6. Flugzeug nach einem der Ansprüche 1 bis 5, **dadurch gekennzeichnet, dass** der zwischen den beiden Führungswänden (20) liegende Bereich des Flugzeugrumpfs (14) ein S-förmiges Profil hat.

7. Flugzeug nach einem der vorangehenden Ansprüche, **dadurch gekennzeichnet, dass** der stromaufwärtige Bereich der Triebwerksgondel (16) in den Flugzeugrumpf (14) eingelassen ist.

8. Flugzeug nach Anspruch 7, **dadurch gekennzeichnet, dass** der stromaufwärtige Bereich der Triebwerksgondel (16) zumindest zu einem Drittel und höchstens zu 50 % innerhalb des Flugzeugrumpfs (14) eingelassen ist.

9. Flugzeug nach einem der vorangehenden Ansprüche, **dadurch gekennzeichnet, dass** der stromabwärtige Bereich eines jeden Triebwerks (12) vom Flugzeugrumpf entfernt liegt und über eine flache Wand (26) mit dem Flugzeugrumpf (14) verbunden ist, welche Wand sich dem Triebwerk (12) nachgelagert über die gesamte Fläche des Raums zwischen Triebwerk und Flugzeugrumpf erstreckt.
